# EUROPÄISCHE PATENTSCHRIFT

(11) **EP 0 781 586 B1**
(45) Veröffentlichungstag und Bekanntmachung des Hinweises auf die Patenterteilung: **17.04.2002**
(21) Anmeldenummer: 96120295.9
(22) Anmeldetag: 18.12.1996
(51) Int. Cl.: B01D 46/24, B01D 29/11

(54) **Ringfiltereinsatz**
Ring filter insert
Elément filtrant annulaire

(30) Priorität: 27.12.1995 DE 19548864
(43) Veröffentlichungstag der Anmeldung: 02.07.1997
(73) Patentinhaber: MAHLE Filtersysteme GmbH, 70376 Stuttgart (DE)
(72) Erfinder: Brieden, Thomas, 71336 Waiblingen (DE); Kraft, Steffen, 70839 Gerlingen (DE); Möhle, Rolf, 74626 Bretzfeld (DE)
(74) Vertreter: Patentanwalts-Partnerschaft Rotermund + Pfusch

(56) Entgegenhaltungen:
- EP-A- 0 685 251
- DD-A- 120 359
- DE-A- 4 416 577
- PATENT ABSTRACTS OF JAPAN vol. 11, no. 379 (C-463) [2826] , 10.Dezember 1987 & JP 62 149313 A (NIPPON DENSO CO LTD), 3.Juli 1987,

## Beschreibung

Die Erfindung betrifft einen Ringfiltereinsatz nach dem Oberbegriff des Patentanspruchs 1 sowie ein Gehäuse hierfür.

Ein solcher aus DE 44 16 577 A1 bekannter Ringfiltereinsatz besitzt an seiner offenen Endscheibe eine radiale Dichtung zum dichten Aufsetzen auf einen von außen in die Endscheibe einsetzbaren Stutzen.

Ringfiltereinsätze mit zumindest einer an einem von deren axialen Enden offenen Endscheibe mit ebenfalls radialen Dichtungen sind aus EP 0 685 251 A1 bekannt. Ob bei diesen Ringfiltereinsätzen die Endscheiben an beiden Enden der Ringfiltereinsätze offen oder ob eine dieser beiden Endscheiben geschlossen ausgeführt ist, hängt ausschließlich davon ab, in welcher Art eines Filtergehäuses sie eingebaut werden sollen. In eingebautem Zustand ist allerdings auch bei an beiden Enden offenen Ringfiltereinsätzen eines der beiden Enden funktionell verschlossenen, wobei dieser funktionelle Verschluß beispielsweise durch ein von dem Filtergehäuse dicht an die betreffende Endscheibenöffnung angreifendes Verschlußmittel gebildet sein kann. Bei einem aus DD 120 359 A bekannten Filter ist ein mit zwei offenen Endscheiben ausgebildeter Ringfiltereinsatz unter anderem über an dem Innenrand der Endscheiben jeweils angeordnete Axialdichtungen gegenüber dem Filtergehäuse gedichtet. Eine der beiden Endscheiben ist dabei durch einen von dem Filtergehäuse in deren Zentrum eingreifenden, undurchlässigen Stutzen funktionell geschlossen, d.h. diese an sich offene Endscheibe entspricht in ihrer Funktion praktisch einer geschlossenen Endscheibe, mit der sie mit Bezug auf die geschlossene Endscheibe nach dem gattungsgemäßen Ringfiltereinsatz gleichgesetzt werden kann.

Ein gattungsgemäßer Ringfiltereinsatz soll unter axialer Verspannung über seinen Dichtring in der offenen Endscheibe dicht in ein Filtergehäuse einsetzbar sein. Die axialen Spannkräfte dürfen dabei keinen Einfluß auf das zwischen den beiden Endscheiben liegende Filtermaterial ausüben. Anderenfalls kann bestimmtes bei einem derartigen Einsatz verwendetes Filtermaterial geschädigt und damit undicht werden.

Hiervon ausgehend beschäftigt sich die Erfindung in erster Linie mit dem Problem, die axialen Spannkräfte für den Dichtring an der offenen Endscheibe allein über die Rohrzarge von der geschlossenen Endscheibe aus zu übertragen. Des weiteren soll eine einfache und rationelle Herstellung des Ringfiltereinsatzes durch eine dies ermöglichende konstruktive Gestaltung dieses Einsatzes erreicht werden.

Gelöst wird dieses Problem durch eine Ausführung des Ringfiltereinsatzes nach den kennzeichnenden Merkmalen des Patentanspruchs 1.

Bei dieser Lösung fehlt an dem offenen Ende des Filtereinsatzes eine feste Verbindung zwischen der Rohrzarge und der offenen Endscheibe. Der Dichtring hat damit gleichzeitig radial und axial zu dichten. Die axiale Dichtung ist notwendig zwischen der Rohrzarge und einer Gegenfläche eines Filtergehäuses, an der der Ringfiltereinsatz dicht anliegen soll. Die radiale Dichtung ist notwendig, um eine Dichtung zwischen der offenen Endscheibe und der Rohrzarge zu erreichen. Indem die Rohrzarge in die Öffnung der offenen Endscheibe hineinragt und gegenüber dieser Endscheibe zwar verbindungsfrei ist, aber andererseits radial nur ein äußerst geringes Spiel zwischen Zarge und Endscheibe gegeben sein soll, läßt sich die Endscheibe bei dieser Montage leicht an der Rohrzarge zentrieren. Die Endscheiben sind üblicherweise aus plastifizierbarem Kunststoff. Die Herstellung des Ringfilterelementes mit einem ringförmigen Papierstern als Filtermaterial kann beispielsweise in der Weise erfolgen, daß in einem ersten Schritt die geschlossene Endscheibe mit der daran fest angebundenen Rohrzarge mit dem Papierstern dicht verbunden wird. Eine solche dichte Verbindung kann dadurch erreicht werden, daß der Papierstern in das Kunststoffmaterial der geschlossenen Endscheibe in bekannter Weise einplastifiziert wird, wozu der Kunststoff der Endscheibe an der dem Papierstern zugewandten Oberfläche durch kurzzeitiges Erwärmen aufgeweicht wird. Die offene Endscheibe wird dann in einem zweiten Schritt ebenfalls durch Einplastifizieren mit dem Papierstern verbunden. Dabei kann die offene Endscheibe an der Rohrzarge zentriert werden.

Eine zweckmäßige Ausgestaltung der geschlossenen Endscheibe zeigt der Patentanspruch 2 auf.

Zur Aufnahme des erfindungsgemäßen Ringfiltereinsatzes wird nach einem weiteren Aspekt der Erfindung ein Gehäuse nach den Merkmalen des Patentanspruchs 3 geschaffen.

Zweckmäßige Ausgestaltungen dieses Gehäuses sind Gegenstand der weiteren Unteransprüche.

Ein Ausführungsbeispiel der Erfindung ist in der Zeichnung dargestellt.

Es zeigen
- Fig. 1: einen Längsschnitt durch einen Ringfiltereinsatz,
- Fig. 2: einen vergrößerten Ausschnitt II aus der Fig. 1,
- Fig. 3: einen Längsschnitt durch ein Filtergehäuse mit einem eingesetzten Ringfiltereinsatz nach Fig. 1.

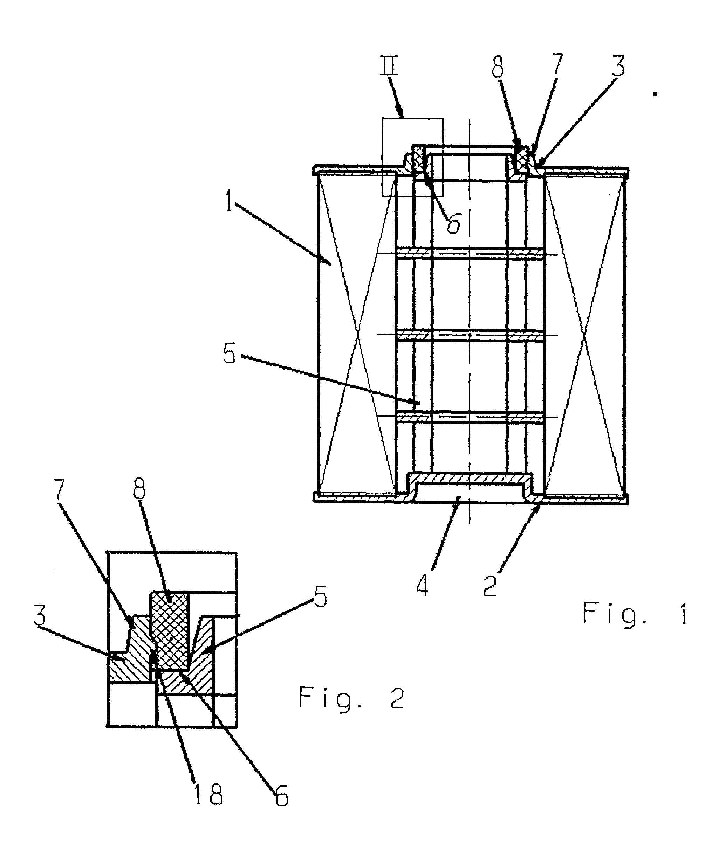

Bei dem Ringfiltereinsatz nach Fig. 1 decken zwei Endscheiben aus plastifizierbarem Kunststoff die Stirnkanten eines ringförmigen Papierfaltensternes 1 dicht ab. Von diesen Endscheiben ist eine Endscheibe 2 geschlossen und die andere Endscheibe 3 zentral offen. Beide Endscheiben sind durch Einplastifizieren der Stirnkanten des Papierfaltensternes in das Endscheibenmaterial mit dem Papierfaltenstern verbunden. Die geschlossene Endscheibe weist in ihrem Zentrum eine napfartige Mulde 4 auf. Im Bereich des Außenrandes dieser Mulde 4 greift im Inneren des Ringfiltereinsatzes eine Rohrzarge 5 an, die den Ringfiltereinsatz über die gesamte Höhe bis in die Öffnung der offenen Scheibe 3 hinein durchgreift. In der Öffnung der offenen Scheibe 3 liegt das freie Ende der Rohrzarge 5 verbindungsfrei mit beispielsweise einem äußerst geringen Ringspaltabstand. Dadurch ist für die offene Endscheibe 3 eine Zentrierung gegeben. In den Endbereich der Rohrzarge 5 ist eine Ringstufe 6 eingeformt. Durch diese Ringstufe 6 entsteht zwischen der Rohrzarge 5 und der offenen Endscheibe 3, an deren innerem Öffnungsrand ein axial überstehender Ringkragen 7 angeformt ist, eine Ringnut. In diese Ringnut ist ein Dichtring 8 eingelegt, der nach axial außen elastisch verformbar vorsteht. In der Ringstufe 6 ist das axiale Ende der Rohrzarge 5 konisch verjüngt ausgeführt, wodurch dem elastischen Dichtring u.a. ein Verformungsraum gegeben wird. Die konische Verjüngung dient darüber hinaus als Montagehilfe für den Dichtring 8. Radial innerhalb des Ringkragens 7 ist ein Ringwulst 18 für einen besseren Halt des Dichtringes 8 angeformt. Dieser bewirkt auch eine besonders gute radiale Dichtung zwischen Rohrzarge 5 und der offenen Endscheibe 3. Diese Ausgestaltung ist aus der Ausschnittvergrößerung in Fig. 2 gut erkennbar.

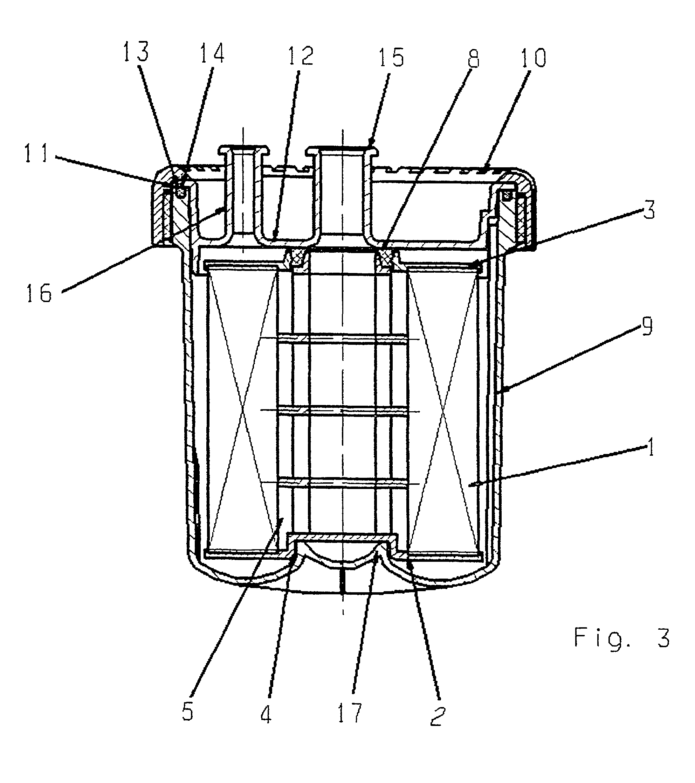

In Fig. 3 ist der Ringfiltereinsatz nach Fig. 1 in ein Filtergehäuse eingebaut.

Dieses Filtergehäuse besteht aus einem Topf 9, auf den ein Überstülpring 10 an dem offenen Ende aufgeschraubt ist. Eingespannt zwischen dem Überstülpring 10 und der Stirnringwand 11 des Topfes ist ein den Topf 9 verschließender Deckel 12. Dieser Deckel 12 besitzt einen radial auskragenden Rand 13, der axial zwischen dem Überstülpring 10 und der Stirnringwand 11 des Topfes 9 eingespannt ist.

Zwischen dem auskragenden Rand 13 und der Stirnringwand 11 ist noch ein axial wirkender Dichtring 14 eingelegt.

Der Deckel 12 ist mit zwei nach außen führenden Stutzen 15 und 16 versehen. Diese Stutzen dienen für einen Zu- und Abfluß in das Filtergehäuse bzw. aus diesem heraus.

Der Ringfiltereinsatz ist über seinen Dichtring 8 dicht mit dem Deckel 12 verbunden, wobei der Innenraum des Ringfiltereinsatzes direkt mit der Öffnung des Stutzens 15 verbunden ist. Die axiale Dichtkraft auf den Dichtring 8 wird von dem Boden des Topfes 9 ausgeübt. Konkret erfolgt die Übertragung von dem Boden des Topfes 9 über einen in diesen zentral eingeformten Anschlag 17, der radial zentrierend in die Mulde 4 des Ringfiltereinsatzes eingreift. Von dem Anschlag 17 wird die axial erforderliche Spannkraft über die Rohrzarge 5 direkt auf den Dichtring 8 übertragen. Der sich unter dieser Spannkraft verformende Dichtring 8 verspannt sich radial zwischen der Zarge und der offenen Endscheibe ebenfalls dicht, so daß hierdurch die erforderliche Dichtung zwischen der offenen Endscheibe 3 und der Rohrzarge 5 gegeben ist.

## Patentansprüche

1. Ringfiltereinsatz mit einer ersten, zentral offenen Endscheibe, die in der Nähe ihres zentralen Öffnungsrandes mit einem nach außen abstehenden gegen eine Gegenfläche eines zur Aufnahme des Filtereinsatzes geeigneten Gehäuses axial dichtend anlegbaren Dichtring versehen ist sowie mit einer von einer zweiten geschlossenen Endscheibe bis in den Bereich der offenen Endscheibe reichenden käfigartigen Rohrzarge,
**dadurch gekennzeichnet,**
**daß** die Rohrzarge (5) verbindungsfrei in die Öffnung der offenen Endscheibe (3) ragt und dort eine nach radial außen offene Ringstufe zur Aufnahme des Dichtringes (8) aufweist, in der der Dichtring (8) radial an dem Innenumfang der offenen Endscheibe (3) anliegt und daß diese Anlage bei axial gespanntem Dichtring (8) dicht ist.

2. Ringfiltereinsatz nach Anspruch 1,
**dadurch gekennzeichnet,**
**daß** die andere Endscheibe als geschlossene Endscheibe (2) ausgebildet und mit einer napfförmigen zentralen, nach außen offenen Mulde (4) versehen ist.

3. Gehäuse mit einem Ringfiltereinsatz nach Anspruch 2,
**dadurch gekennzeichnet,**

4. Gehäuse nach Anspruch 3,
**dadurch gekennzeichnet,**
**daß** der Überstülpring (10) auf den Topf (9) aufgeschraubt ist.

5. Gehäuse nach Anspruch 3 oder 4,
**dadurch gekennzeichnet,**
**daß** der Deckel (12) oder ein von diesem ausgehender Rand zwischen dem Überstülpring (10) und der Stirnwand (11) an dem offenen Ende des Topfes (9) dicht verspannt ist.

6. Gehäuse nach Anspruch 5,
daß dieses aus einem Topf (9) mit einem über einen Überstülpring (10) dicht aufgesetzten Deckel (12) mit zwei nach außen führenden Öffnungen innerhalb des Deckels (12) besteht, wobei der Boden des Topfes mit einem Anschlag (17) zur Anlage an das geschlossene Ende des Ringfiltereinsatzes versehen ist, der an dem Ringfiltereinsatz ausschließlich im Umfangsbereich der Rohrzarge (5) anliegt, und daß der Dichtring (8) an der offenen Endscheibe (3) eine der nach außen führenden Öffnungen des Dekkels (12) umfaßt und dicht gegen diesen unter dem vom Anschlag (17) des Topfes ausgehenden Druck anliegt.
**dadurch gekennzeichnet,**
**daß** zwischen dem Deckel (12) bzw. ein von diesem ausgehenden Rand und der Stirnwand (11) des Topfes (9) eine Ringdichtung (14) vorgesehen ist.

7. Gehäuse nach Anspruch 6,
**dadurch gekennzeichnet,**
**daß** die Ringdichtung (14) axial wirkend ist.

8. Gehäuse nach einem der Ansprüche 3 bis 7,
**dadurch gekennzeichnet,**
**daß** der Anschlag (17) in dem Boden des Topfes (9) in die napfförmige Mulde (4) der geschlossenen Endscheibe (3) des Ringfiltereinsatzes eingreift und diesen zentriert.

9. Gehäuse nach einem der Ansprüche 3 bis 8,
**dadurch gekennzeichnet,**
**daß** in der radialen Anlagefläche der offenen Endscheibe (3) ein Ringwulst (18) vorgesehen ist.

## Claims

1. A ring filter insert with a first, centrally open end plate, which near its central opening edge is provided with an outwardly projecting conical nipple that can be fit in an axially sealing manner against a counter-surface of a casing suitable for accommodating the filter insert, as well as with a cage-like tubular frame extending from a second closed end plate into the area of the open end plate, **characterized in that** the tubular frame (5) extends connection-free into the opening of the open end plate (3), and there exhibits an annular shoulder radially open to the outside for holding the conical nipple (8), in which the conical nipple (8) radially abuts the inner periphery of the open end plate (3), and that this fit is tight given an axially tensioned conical nipple (8).

2. A ring filter insert according to claim 1, **characterized in that** the other end plate is designed as a closed end plate (2), and provided with a cup-shaped, central, outwardly open trough (4).

3. A casing with a ring filter insert according to claim 2, **characterized in that** it consists of a pot (9) with a cover (12) tightly sealed with a clap-on ring (10), with two holes within the cover (12) that lead to the outside, wherein the floor of the pot is provided with a stop (17) to rest against the sealed end of the ring filter insert, which abuts the ring filter insert only in the peripheral area of the tubular frame (5), and that the conical nipple (8) at the open end plate (3) encompasses one of the outwardly leading openings of the cover (12), and tightly abuts the latter under the pressure emanating from the stop (17) of the pot.

4. A casing according to claim 3, **characterized in that** the clap-on ring (10) is screwed onto the pot (9).

5. A casing according to claim 3 or 4, **characterized in that** the cover (12) or an edge originating from it is tightly braced between the clap-on ring (10) and the front wall (11) at the open end of the pot (9).

6. A casing according to claim 5, **characterized in that** a ring packing (14) is provided between the cover (12) or an edge originating from it and the front wall (11) of the pot (9).

7. A casing according to claim 6, **characterized in that** the ring packing (14) exerts an axial effect.

8. A casing according to one of claims 3 to 7, **characterized in that** the stop (17) in the floor of the pot (9) engages the cup-shaped trough (4) of the closed end plate (3) of the ring filter insert, and centers the latter.

9. A casing according to one of claims 3 to 8, **characterized in that** an annular ring (18) is provided in the radial bearing surface of the open end plate (3).

## Revendications

1. Cartouche filtrante annulaire comportant une première plaque d'extrémité ouverte en son centre, munie au voisinage de son bord d'ouverture central d'un anneau d'étanchéité en saillie vers l'extérieur, insérable hermétiquement axialement contre une contre-surface d'un boîtier adapté pour recevoir la cartouche filtrante, ainsi qu'un cadre tubulaire en forme de cage, s'étendant d'une seconde plaque d'extrémité fermée jusque dans la zone de la plaque d'extrémité ouverte,
**caractérisé en ce**
**que** le cadre tubulaire (5) pénètre sans assemblage dans l'ouverture de la plaque d'extrémité ouverte (3) et y présente un épaulement annulaire ouvert radialement vers l'extérieur pour recevoir l'anneau d'étanchéité (8), dans lequel l'anneau d'étanchéité (8) s'applique radialement sur le pourtour intérieur de la plaque d'extrémité ouverte (3), et que cet appui est hermétique à l'état de serrage axial de l'anneau d'étanchéité (8).

2. Cartouche filtrante annulaire suivant la revendication 1,
**caractérisé en ce**
**que** l'autre plaque d'extrémité est réalisée sous forme de plaque d'extrémité fermée (2) et est munie d'une cavité centrale (4) en forme de godet, ouverte vers l'extérieur.

3. Boîtier comportant une cartouche filtrante annulaire suivant la revendication 2,
**caractérisé en ce**
**que** ce boîtier se compose d'un pot (9) muni d'un couvercle (12) mis en place hermétiquement par l'intermédiaire d'une bague de recouvrement (10), avec deux ouvertures menant vers l'extérieur à l'intérieur du couvercle 12, le fond du pot étant muni d'une butée (17) pour l'appui sur l'extrémité fermée de la cartouche filtrante annulaire, butée qui s'applique sur la cartouche filtrante annulaire exclusivement dans la zone de pourtour du cadre tubulaire (5), et que l'anneau d'étanchéité (8) entoure sur la plaque d'extrémité ouverte (3) l'une des ouvertures, menant vers l'extérieur, du couvercle (12) et s'applique hermétiquement contre ce dernier sous la pression provenant de la butée (17) du pot.

4. Boîtier suivant la revendication 3,
**caractérisé en ce**
**que** la bague de recouvrement (10) est vissée sur le pot (9).

5. Boîtier suivant l'une des revendications 3 et 4,
**caractérisé en ce**
**que** le couvercle (12) ou un bord partant de ce dernier est serré hermétiquement entre la bague de recouvrement (10) et la paroi frontale (11) sur l'extrémité ouverte du pot (9).

6. Boîtier suivant la revendication 5,
**caractérisé en ce**
**qu'**un joint d'étanchéité annulaire (14) est prévu entre le couvercle (12) ou un bord partant de ce dernier et la paroi frontale (11) du pot (9).

7. Boîtier suivant la revendication 6,
**caractérisé en ce**
**que** le joint d'étanchéité annulaire (14) agit axialement.

8. Boîtier suivant l'une des revendications 3 à 7,
**caractérisé en ce**
**que** la butée (17) s'engage dans le fond du pot (9) dans la cavité (4) en forme de godet de la plaque d'extrémité fermée (3) de la cartouche filtrante annulaire et centre cette dernière.

9. Boîtier suivant l'une des revendications 3 à 8,
**caractérisé en ce**
**qu'**un bourrelet annulaire (18) est prévu dans la surface d'appui radiale de la plaque d'extrémité ouverte (3).
